# EUROPEAN PATENT APPLICATION

(11) **EP 3 860 211 A1**
(43) Date of publication of application: **04.08.2021**
(21) Application number: 19874122.5
(22) Date of filing: 27.05.2019
(51) Int. Cl.: H04W 28/10, H04W 16/26, H04W 16/32, H04W 24/02, H04W 84/10

(54) **RELAY DEVICE, COMMUNICATION CONTROL METHOD, AND PROGRAM**

(30) Priority: 17.10.2018 JP 2018195833
(71) Applicant: Softbank Corp., Tokyo 105-7529 (JP)
(72) Inventor: NOMACHI, Masanori, Tokyo 105-7317 (JP); NANRI, Masahiko, Tokyo 105-7317 (JP); KONDO, Mitsuhiro, Tokyo 105-7317 (JP); NOGUCHI, Kazuhito, Tokyo 105-7317 (JP); FUKUMOTO, Shiro, Tokyo 105-7317 (JP); ABE, Tatsuro, Tokyo 105-7317 (JP); IIDA, Motoki, Tokyo 105-7317 (JP)
(74) Representative: Würmser, Julian
(86) International application number: PCT/JP2019/020922
(87) International publication number: WO 2020/079880

(57) **Abstract**

A relay apparatus capable of deciding an appropriate maximum available throughput is provided. A relay apparatus (20) for relaying communication between a macro cell base station (30) and a terminal device(s) (10) includes: a receiving unit (205) that receives an MCS and the number of layers in an uplink direction or a downlink direction, which are decided at the macro cell base station (30) on the basis of a communication status in the uplink direction or the downlink direction, from the macro cell base station (30); a calculation unit (206) that calculates a maximum available throughput in the uplink direction or the downlink direction on the basis of a maximum number of resource blocks to which the received MCS and the received number of layers in the uplink direction or the downlink direction and the macro cell base station (30) can be allocated; and a change unit (207) that changes a value of the maximum available throughput, which exceeds a threshold value, to the threshold value if the calculated maximum available throughput in the uplink direction and the downlink direction exceed their respective threshold values.

## Description

### TECHNICAL FIELD

The present invention relates to a relay apparatus, communication control method, and program capable of relaying communication between a macro cell base station(s) and a terminal device(s).

### BACKGROUND ART

LTE (Long Term Evolution) has been gaining widespread use in place of the third-generation mobile communication system (3G: 3^{rd} Generation) as a standardization standard for radio communication systems. LTE is a telecommunications standard for supporting only packet communications and voices are converted to packets according to VoIP (Voice over Internet Protocol) and sent and received as packets. Particularly, VoIP according to the LTE standard is called VoLTE (Voice over LTE).

PTL 1 mentioned below discloses a technology that calculates a maximum available throughput which can be used for communication between a base station and a user apparatus according to LTE. This PTL 1 calculates the maximum available throughput on the basis of a CQI (Channel Quality Indicator) report fed back from the user apparatus, which has received a pilot signal sent from the base station in a downlink direction, to the base station.

PTL 2 mentioned below discloses a technology regarding a femto cell base station for relaying packet communication between a macro cell base station and a mobile unit.

### CITATION LIST

### PATENT LITERATURE

PTL 1: Japanese Patent Application Laid-Open (Kokai) Publication No. 2015-133700
PTL 2: Japanese Patent Application Laid-Open (Kokai) Publication No. 2016-171536

### SUMMARY OF THE INVENTION

### TECHNICAL PROBLEM

Meanwhile, regarding PTL 1, the communication between the base station and the user apparatus is controlled on the basis of the maximum available throughput in the downlink direction from the base station to the user apparatus. Therefore, for example, even in the circumstance where the maximum available throughput in an uplink direction becomes smaller than the maximum available throughput in the downlink direction, the communication in the uplink direction will be controlled on the basis of the maximum available throughput in the downlink direction.

When controlling the communication between the relay apparatus like the femto cell base station described in PTL 2 and the macro cell base station, there is a possibility that the communication quality may degrade if an attempt is made to control the communication on the premise that a throughput which is larger than the actual maximum available throughput can be used.

The present invention was devised in light of the above-described circumstances and it is one of objects to decide an appropriate maximum available throughput when controlling the communication at the relay apparatus capable of relaying the communication between the macro cell base station(s) and the terminal device(s).

### SOLUTION TO PROBLEM

A relay apparatus according to one aspect of the present invention is a relay apparatus capable of relaying communication between a macro cell base station and at least one terminal device, wherein the relay apparatus includes: a receiving unit that receives an MCS (Modulation and Coding Scheme) and the number of layers in an uplink direction, which are decided at a macro cell base station on the basis of a communication status in the uplink direction from a local apparatus to the macro cell base station, and receives an MCS and the number of layers in a downlink direction, which are decided at the macro cell base station on the basis of a communication status in the downlink direction from the macro cell base station to the local apparatus; a calculation unit that calculates a maximum available throughput in the uplink direction on the basis of the received MCS and the received number of layers in the uplink direction and a maximum number of resource blocks which can be allocated by the macro cell base station, and calculates a maximum available throughput in the downlink direction on the basis of the received MCS and the received number of layers in the downlink direction and a maximum number of resource blocks which can be allocated by the macro cell base station; and a change unit that: changes a value of the maximum available throughput in the uplink direction to a first threshold value if the calculated maximum available throughput in the uplink direction exceeds the first threshold value; and changes a value of the maximum available throughput in the downlink direction to a second threshold value if the maximum available throughput in the downlink direction exceeds the second threshold value.

According to the above-described aspect, the relay apparatus may further include: a plurality of backhaul communication units, each of which establishes a backhaul communication path associated with specified identification information between the relevant backhaul communication unit and the macro cell base station associated with the specified identification information; and a communication control unit that controls communication between the terminal device associated with the specified identification information and the specified backhaul communication path associated with the specified identification information, wherein the receiving unit may receive the MCS and the number of layers in the uplink direction and the MCS and the number of layers in the downlink direction with respect to each established backhaul communication path; wherein the calculation unit may calculate the maximum available throughput in the uplink direction and the maximum available throughput in the downlink direction with respect to each established backhaul communication path; and wherein the change unit may change the value of the maximum available throughput in the uplink direction and the value of the maximum available throughput in the downlink direction with respect to each established backhaul communication path.

According to the above-described aspect, the calculation unit may calculate a maximum throughput which can be used in the uplink direction on the basis of a value calculated from a combination of an index corresponding to the received MCS in the uplink direction and the maximum number of resource blocks, and the received number of layers in the uplink direction and calculate a maximum throughput which can be used in the downlink direction on the basis of a value calculated from a combination of an index corresponding to the received MCS in the downlink direction and the maximum number of resource blocks, and the received number of layers in the downlink direction.

According to the above-described aspect, the receiving unit may further receive the maximum number of resource blocks when connecting to the macro cell base station.

According to the above-described aspect, the communication may be voice calls; and the change unit may change the calculated value of either the maximum available throughput in the uplink direction or the maximum available throughput in the downlink direction, whichever is larger, to a smaller value of either of them.

According to the above-described aspect, the relay apparatus may further include a transmission unit that sends an alarm to a core network to which the macro cell base station connects when the calculated maximum available throughput is smaller than a third threshold value.

According to the above-described aspect, the relay apparatus may further include a connection control unit that controls a maximum number of the terminal devices which can be connected when the calculated maximum available throughput is smaller than a fourth threshold value.

A communication control method according to another aspect of the present invention is a communication control method for controlling communication of a relay apparatus capable of relaying communication between a macro cell base station and at least one terminal device, wherein the communication control method includes: a reception step of receiving an MCS and the number of layers in an uplink direction, which are decided at the macro cell base station on the basis of a communication status in the uplink direction from the relay apparatus to the macro cell base station, and receiving an MCS and the number of layers in a downlink direction, which are decided at the macro cell base station on the basis of a communication status in the downlink direction from the macro cell base station to the relay apparatus; a calculation step of calculating a maximum available throughput in the uplink direction on the basis of the received MCS and the received number of layers in the uplink direction and a maximum number of resource blocks which can be allocated by the macro cell base station, and calculating a maximum available throughput in the downlink direction on the basis of the received MCS and the received number of layers in the downlink direction and a maximum number of resource blocks which can be allocated by the macro cell base station; and a change step of: changing a value of the maximum available throughput in the uplink direction to a first threshold value if the calculated maximum available throughput in the uplink direction exceeds the first threshold value; and changing a value of the maximum available throughput in the downlink direction to a second threshold value if the maximum throughput in the downlink direction exceeds the second threshold value.

A program according to another aspect of the present invention is a program for causing a computer to function as: a receiving unit that receives an MCS and the number of layers in an uplink direction, which are decided at a macro cell base station on the basis of a communication status in the uplink direction from a relay apparatus, which is capable of relaying communication between the macro cell base station and at least one terminal device, to the macro cell base station, and receives an MCS and the number of layers in a downlink direction, which are decided at the macro cell base station on the basis of a communication status in the downlink direction from the macro cell base station to the relay apparatus; a calculation unit that calculates a maximum available throughput in the uplink direction on the basis of the received MCS and the received number of layers in the uplink direction and a maximum number of resource blocks which can be allocated by the macro cell base station, and calculates a maximum available throughput in the downlink direction on the basis of the received MCS and the received number of layers in the downlink direction and a maximum number of resource blocks which can be allocated by the macro cell base station; and a change unit that: changes a value of the maximum available throughput in the uplink direction to a first threshold value if the calculated maximum available throughput in the uplink direction exceeds the first threshold value; and changes a value of the maximum available throughput in the downlink direction to a second threshold value if the maximum available throughput in the downlink direction exceeds the second threshold value.

### ADVANTAGEOUS EFFECTS OF THE INVENTION

The appropriate maximum available throughput can be decided according to the present invention when controlling the communication at the relay apparatus capable of relaying the communication between the macro cell base station(s) and the terminal device(s).

### BRIEF DESCRIPTION OF DRAWINGS

[Fig. 1] Fig. 1 is a schematic diagram of a mobile communications system including a relay apparatus according to an embodiment;
[Fig. 2] Fig. 2 is a functional configuration diagram of the relay apparatus according to the embodiment;
[Fig. 3] Fig. 3 is a diagram illustrating an example of a table to which the relay apparatus according to the embodiment refers;
[Fig. 4] Fig. 4 is a diagram illustrating an example of a table to which the relay apparatus according to the embodiment refers;
[Fig. 5] Fig. 5 is a diagram illustrating an example of a table to which the relay apparatus according to the embodiment refers;
[Fig. 6] Fig. 6 is a diagram illustrating an example of a table to which the relay apparatus according to the embodiment refers;
[Fig. 7] Fig. 7 is a diagram illustrating an example of a table to which the relay apparatus according to the embodiment refers;
[Fig. 8] Fig. 8 is a hardware configuration diagram of a relay apparatus according to a first variation;
[Fig. 9] Fig. 9 is a schematic diagram for explaining functions of the relay apparatus according to the first variation;
[Fig. 10] Fig. 10 is a diagram for explaining the functions of the relay apparatus according to the first variation; and
[Fig. 11] Fig. 11 is a diagram for explaining functions of the relay apparatus according to a second variation.

### DESCRIPTION OF EMBODIMENTS

An embodiment of the present invention will be explained with reference to the drawings. It should be noted that the embodiment explained below is just for illustration and is not intended to exclude applications of various variations or technologies which are not clearly specified below. In other words, the present invention can be implemented in various variations within the range not departing from the gist of the invention. Furthermore, in the descriptions of a series of the drawings, the same or similar reference numerals are assigned to the same or similar parts.

### [Configuration of Mobile Communications System]

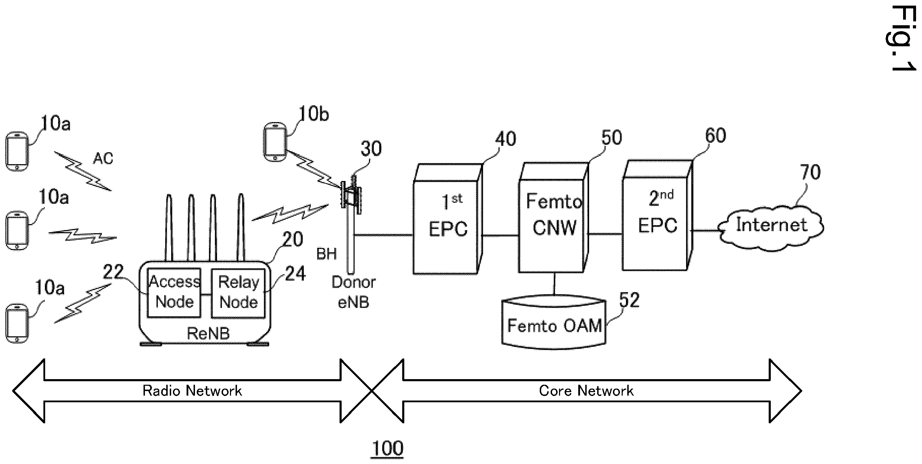

Fig. 1 is a configuration diagram of a mobile communications system including a relay apparatus according to an embodiment of the present invention. A mobile communications system 100 is a mobile communications system capable of providing voice communications services illustratively via the VoLTE according to the LTE system standardized in 3GPP and includes a radio network and a core network. The configuration of the radio network and the configuration of the core network will be sequentially explained below.

### (Configuration of Radio Network)

Referring to Fig. 1, the mobile communications system 100 includes, as the configuration relating to the radio network, terminal devices 10, a relay apparatus 20, and a donor base station (macro cell base station) 30. Incidentally, the radio network is also called an E-UTRAN (Evolved Universal Terrestrial Radio Access Network) according to the LTE system.

The terminal device 10 is a mobile portable communications terminal such as a smartphone or a cell phone and is also called UE (User Equipment). Fig. 1 shows: terminal devices 10a which exist in a service area within a cell (communication-enabled range) formed by the relay apparatus 20 and are connected to the relay apparatus 20; and a terminal device 10b which exists in a service area within a cell formed by the donor base station 30 and is connected to the donor base station 30. The terminal device(s) 10a and the terminal device 10b will be sometimes collectively referred to as the terminal device(s) 10.

The relay apparatus 20 is portable, installable, and relocatable and can be installed not only outside, but also indoors. The relay apparatus 20 is also called a ReNB (Repeater type eNodeB) according to the LTE system and constitutes one node in the radio network.

The relay apparatus 20 is configured by including an access node 22 and a relay node 24.

The access node 22 is also called a femto base station, establishes radio communication with the terminal device 10a, and provides the terminal device 10a with packet communication services (such as a voice packet communication service and a multimedia service). A radio communication path established between the access node 22 and the terminal device 10a is also called an access communication path AC. The cell size of the cell formed by the access node 22 is of a smaller scale than that of the donor base station 30 and constructs a communication area with a radius ranging from several meters to several tens of meters.

The access node 22 establishes a radio communication path with the donor base station 30 via the relay node 24. The relay node 24 is also called CPE (Customer Premises Equipment). The radio communication path is established between the relay node 24 and the donor base station 30 and is also called a backhaul communication path BH.

Incidentally, the access node 22 and the relay node 24 may be configured as separate nodes. If they are configured as separate nodes, the relay node 24 serves the role as the relay apparatus according to the present invention.

The donor base station 30 is also called a Donor eNB (Donor eNodeB) according to the LTE system and establishes a backhaul communication path BH with the relay node 24. The donor base station 30 also directly establishes an access communication path AC with the terminal device 10b. The donor base station 30 constructs a communication area with a radius ranging from several hundreds of meters to ten-odd kilometers.

### (Configuration of Core Network)

Referring to Fig. 1, the mobile communications system 100 includes, as the configuration relating to the core network, a first core network EPC (Evolved Packet Core) 40, a femto core network (Femto Core Network) 50, and a second core network EPC 60. Incidentally, an explanation will be provided by assuming that this embodiment includes the first core network EPC 40 and the second core network EPC 60; however, the core network EPC may be configured from one core network.

The first core network EPC 40 connects to, for example, the donor base station 30 and has functions such as: a function that manages movements of, authenticates, and manages packet communication data path setting processing for the individual terminal devices 10b and the relay node 24 via the donor base station 30; a function that implements quality management in the radio network; a function that controls call connection for providing mobile communication services and controls the services; and a function as a switching station that receives calls for a contract holder within the radio network or a subscriber during roaming within the radio network from an external network such as the Internet 70.

The femto core network 50 is a network for performing various kinds of management regarding the relay apparatus 20. The femto core network 50 is connected to, for example, a femto OAM (Femto Operations Administration Maintenance) 52 and has a function that operates, manages, and maintains the relay apparatus 20.

The second core network EPC 60 has, for example: a function that controls call connection for providing the mobile communication services and controls the services; a function as a switching station that receives calls for a contract holder within the radio network or a subscriber during roaming within the radio network from an external network such as the Internet 70; a function that manages movements of, authenticates, and manages packet communication data path setting processing for the individual terminal devices 10a within the second core network EPC 60; and a function that executes communication policy control, such as quality control, and control according to accounting rules.

### (Configuration and Operations of Relay Apparatus)

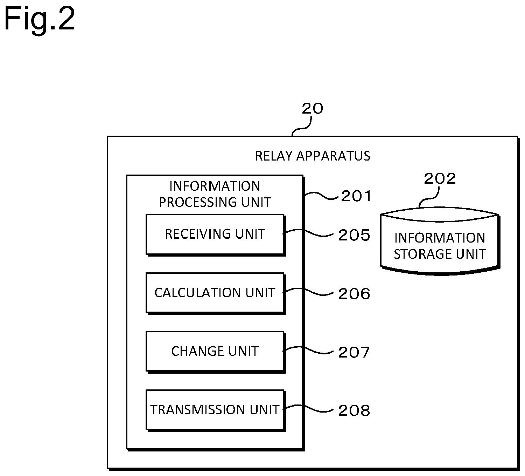

Fig. 2 is a functional configuration diagram of the relay apparatus according to the embodiment of the present invention. Referring to Fig. 2, the relay apparatus 20 includes, as a functional configuration, for example, an information processing unit 201 that executes information processing for controlling communication between the donor base station 30 and the relay apparatus 20, and an information storage unit 202 that stores, for example, data used to control the communication between the donor base station 30 and the relay apparatus 20.

The relay apparatus 20 includes, as a physical configuration, for example, a central processing unit (CPU) and a memory and functionally implements the information processing unit 201 by execution of a computer software program by the CPU. The information processing unit 201 illustratively includes a receiving unit 205, a calculation unit 206, a change unit 207, and a transmission unit 208.

The receiving unit 205 receives an MCS (Modulation and Coding Scheme) which is determined by a set of a modulation method and a coded rate, and the number of layers, which is the number of streams that can be transmitted at the same time, from the donor base station 30. Illustratively, the MCS can be decided from "0" to "31" and the number of layers can be decided up to a maximum of eight according to the LTE standards.

The MCS and the number of layers are decided by the donor base station 30 as follows. The donor base station 30 decides the MCS and the number of layers in an uplink direction, which is a direction from the relay apparatus 20 to the donor base station 30 (hereinafter referred to the "uplink direction"), on the basis of a communication status in the uplink direction. The donor base station 30 decides the MCS and the number of layers in a downlink direction, which is a direction from the donor base station 30 to the relay apparatus 20 (hereinafter referred to as the "downlink direction"), on the basis of a communication status in the downlink direction.

The receiving unit 205 receives the maximum number of resource blocks from the donor base station 30 when connecting to the donor base station 30. The maximum number of resource blocks is the maximum number of resource blocks which can be allocated by the donor base station 30 to each bandwidth used for the communication with the relay apparatus 20 (hereinafter also referred to as a "system bandwidth"). Illustratively, if the system bandwidth is 10 MHz, the maximum number of resource blocks becomes "50"; and if the system bandwidth is 15 MHz, the maximum number of resource blocks becomes "75."

Incidentally, the maximum number of resource blocks does not necessarily have to be received from the donor base station 30. For example, the relay apparatus 20 may retain a table in which the correspondence relationship between the system bandwidth of each donor base station 30 and the maximum number of resource blocks is set; and the relay apparatus 20 may acquire the maximum number of resource blocks from the above-described table on the basis of the system bandwidth of the connected donor base station 30.

The calculation unit 206 calculates the maximum available throughput which can be used in the uplink direction or the downlink direction on the basis of the MCS and the number of layers in the uplink direction or the downlink direction, which are received by the receiving unit 205, and the maximum number of resource blocks.

Specifically speaking, the calculation unit 206 calculates the maximum available throughput which can be used in the uplink direction on the basis of a value calculated from a combination of an index corresponding to the MCS in the uplink direction, which is received by the receiving unit 205, and the maximum number of resource blocks, and the number of layers in the uplink direction, which is received by the receiving unit 205. Furthermore, the calculation unit 206 calculates the maximum available throughput which can be used in the downlink direction on the basis of a value calculated from a combination between an index corresponding to the MCS in the downlink direction, which is received from the receiving unit 205, and the maximum number of resource blocks, and the number of layers in the downlink direction which is received by the receiving unit 205.

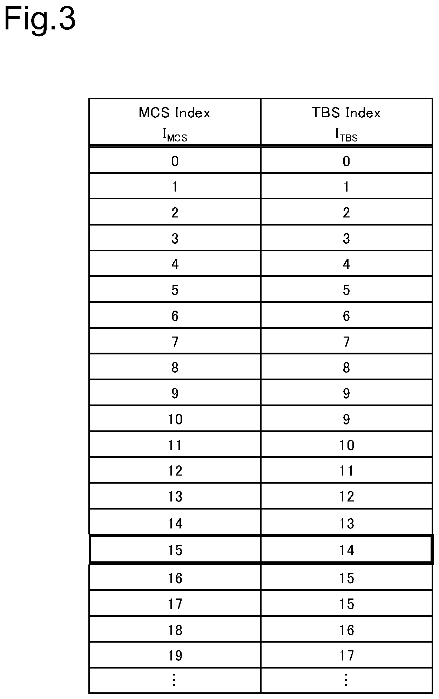

An explanation will be provided below about an example of a procedure executed by the calculation unit 206 to calculate the maximum available throughput which can be used in the uplink direction or the downlink direction. With this exemplification, an explanation will be provided about a case where the calculation unit 206 calculates the maximum available throughput by referring to tables illustrated in Fig. 3 to Fig. 7. Each table is stored in the information storage unit 202.

Fig. 3 is a part of "Table 7.1.7.1-1" of "3GPP TS 36.213 V10.12.0 (2014-03) (hereinafter referred to as "NPL 1")." This table is a table that stores the correspondence relationship between I_{MCS} which is an "MCS Index" and I_{TBS} which is a "TBS (Transport Block Size) Index." In this exemplification, the value of the MCS received from the donor base station 30 is used as the value of I_{MCS}. The TBS is the number of bits which can be transmitted in 1 [TTI] (1 [ms]) and is classified by the index.

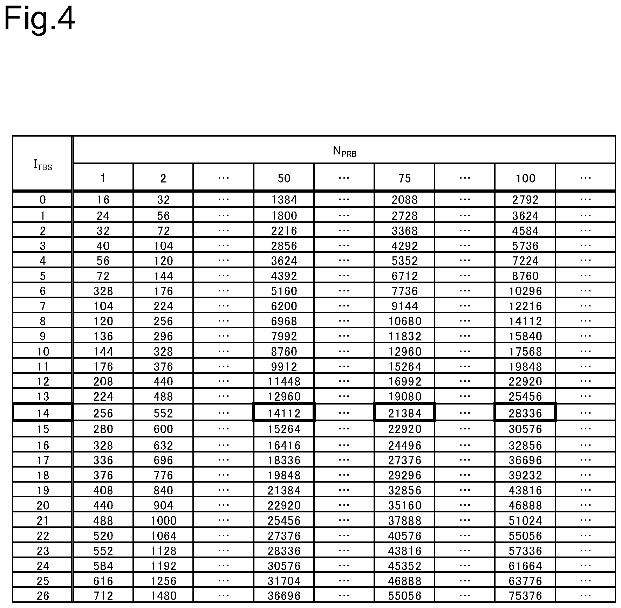

Fig. 4 is a part of "Table 7.1.7.2.1-1" of NPL 1. This table is a table that stores the maximum value of the TBS where the number of layers = 1, with respect to each combination of I_{TBS} and N_{PRB}, which is the maximum number of resource blocks.

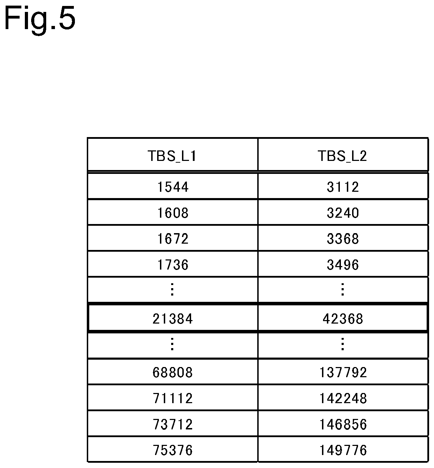

Under this circumstance, if the number of layers = 2 and N_{PRB}≤55, the maximum value of the TBS where the number of layers = 2 is acquired by doubling the value of N_{PRB} and referring to the table in Fig. 4. On the other hand, if the number of layers = 2 and N_{PRB}>55, the maximum value of the TBS where the number of layers = 2 is acquired by converting the maximum value of the TBS where the number of layers = 1, which is acquired from the table in Fig. 4, by using the table in Fig. 5.

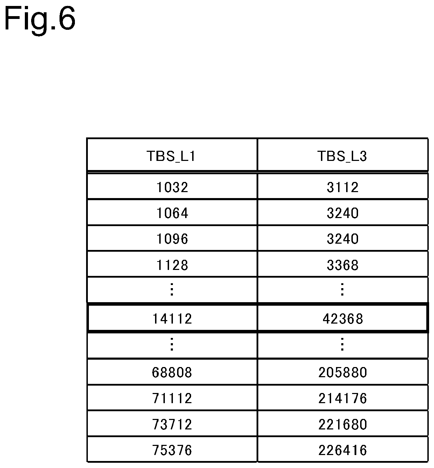

Moreover, if the number of layers = 3 and N_{PRB}≤36, the maximum value of the TBS where the number of layers = 3 is acquired by tripling the value of N_{PRB} and referring to the table in Fig. 4. On the other hand, if the number of layers = 3 and N_{PRB}>36, the maximum value of the TBS where the number of layers = 3 is acquired by converting the maximum value of the TBS where the number of layers = 1, which is acquired from the table in Fig. 4, by using the table in Fig. 6.

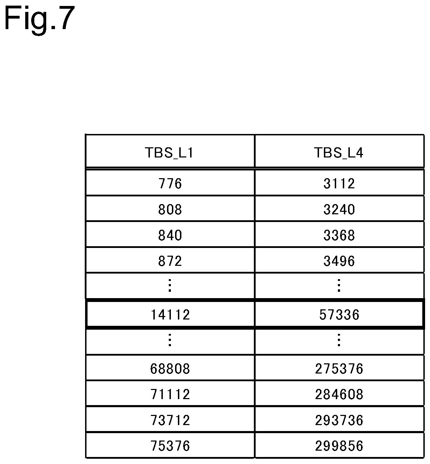

Furthermore, if the number of layers = 4 and N_{PRB}≤27, the maximum value of the TBS where the number of layers = 4 is acquired by quadrupling the value of N_{PRB} and referring to the table in Fig. 4. On the other hand, if the number of layers = 4 and N_{PRB}>27, the maximum value of the TBS where the number of layers = 4 is acquired by converting the maximum value of the TBS where the number of layers = 1, which is acquired from the table in Fig. 4, by using the table in Fig. 7.

Under this circumstance, data communication according to the 3GPP standards is conducted on a codeword basis and a maximum of four layers can be sent with one codeword. For example, if data is to be sent with four layers, it is possible to send the four layers via one codeword or to allocate two layers to one codeword and send the four layers via two codewords.

Illustratively, if the four layers are sent via one codeword, the maximum value of the TBS where the above-mentioned number of layers = 4 is acquired and the number of bits corresponding to the acquired TBS is a data volume which can be transmitted in 1 [ms]. Similarly, if two layers are allocated to one codeword and four layers are sent via two codewords, the maximum value of the TBS where the above-mentioned number of layers = 2 is acquired for each codeword and a total number of bits corresponding to the respectively acquired TBS is a data volume which can be transmitted in 1 [ms].

Fig. 5 is a part of "Table 7.1.7.2.2-1" of NPL 1. This table is a table to which the reference is made where the number of layers = 2 and N_{PRB}>55. This table stores the respective values before and after conversion for converting the maximum value of the TAS where the number of layers = 1 which is acquired from the table in Fig. 4, to the maximum value of the TBS where the number of layers = 2.

Fig. 6 is a part of "Table 7.1.7.2.4-1" of NPL 1. This table is a table to which the reference is made where the number of layers = 3 and N_{PRB}>36. This table stores the respective values before and after conversion for converting the maximum value of the TAS where the number of layers = 1 which is acquired from the table in Fig. 4, to the maximum value of the TBS where the number of layers = 3.

Fig. 7 is a part of "Table 7.1.7.2.5-1" of NPL 1. This table is a table to which the reference is made where the number of layers = 4 and N_{PRB}>27. This table stores the respective values before and after conversion for converting the maximum value of the TAS where the number of layers = 1, which is acquired from the table in Fig. 4, to the maximum value of the TBS where the number of layers = 4.

An explanation will be provided about the respective procedures for calculating the maximum available throughput on the basis of the tables illustrated in Fig. 3 to Fig. 7 under the respective conditions (1) to (5) exemplified below. Since the maximum available throughput in the uplink direction and the downlink direction can be calculated in the same manner, the following explanation will be provided without specifying either the uplink direction or the downlink direction.

(1) Where the system bandwidth = 10 [MHz], the maximum number of resource blocks (N_{PRB}) = 50, the number of layers = 1, and the MCS Index (I_{MCS}) = 15;

Firstly, the calculation unit 206 refers to the table in Fig. 3 and identifies I_{TBS}= 14 corresponding to I_{MCS}= 15.

Then, the calculation unit 206 refers to the table in Fig. 4 and acquires 14112 [bit] which is the maximum value of the TBS where the number of layers = 1, on the basis of I_{TBS}= 14 and NPRB= 50.

Subsequently, the calculation unit 206 calculates 14112000 [bps], which is the maximum available throughput by multiplying 14112 [bits], which is the acquired maximum value of the TBS, by 1000.

(2) Where the system bandwidth = 10 [MHz], the maximum number of resource blocks (N_{PRB}) = 50, the number of layers = 2, and the MCS Index (I_{MCS}) = 15;

Firstly, the calculation unit 206 refers to the table in Fig. 3 and identifies I_{TBS}= 14 corresponding to I_{MCS}= 15.

Then, since the number of layers = 2 and N_{PRB}≤55, the calculation unit 206 refers to the table in Fig. 4 and acquires 28336 [bits], which is the maximum value of the TBS where the number of layers = 2, on the basis of 100, which is twice as much as I_{TBS}= 14 and NPRB= 50.

Subsequently, the calculation unit 206 calculates 28336000 [bps], which is the maximum available throughput, by multiplying 28336 [bits], which is the acquired maximum value of the TBS, by 1000.

(3) Where the system bandwidth = 15 [MHz], the maximum number of resource blocks (N_{PRB}) = 75, the number of layers = 2, and the MCS Index (I_{MCS}) = 15;

Firstly, the calculation unit 206 refers to the table in Fig. 3 and identifies I_{TBS}= 14 corresponding to I_{MCS}= 15.

Then, since the number of layers = 2 and N_{PRB}>55, the calculation unit 206 refers to the table in Fig. 4 and acquires 21384 [bits], which is the maximum value of the TBS where the number of layers = 1, from I_{TBS}= 14 and N_{PRB}= 75.

Then, since the number of layers = 2 and N_{PRB}>55, the calculation unit 206 refers to the table in Fig. 5 and acquires 42368 [bits] as the maximum value of the TBS where the number of layers = 2 corresponding to 21384 [bits], which is the maximum value of the TBS where the number of layers = 1.

Subsequently, the calculation unit 206 calculates 42368000 [bps], which is the maximum available throughput by multiplying 42368 [bits], which is the maximum value of the TBS where the acquired number of layers = 2, by 1000.

(4) Where the system bandwidth = 10 [MHz], the maximum number of resource blocks (N_{PRB}) = 50, the number of layers = 3, and the MCS Index (I_{MCS}) = 15;

Firstly, the calculation unit 206 refers to the table in Fig. 3 and identifies I_{TBS}= 14 corresponding to I_{MCS}= 15.

Then, since the number of layers = 3 and N_{PRB}>36, the calculation unit 206 refers to the table in Fig. 4 and acquires 14112 [bits], which is the maximum value of the TBS where the number of layers = 1, from I_{TBS}= 14 and N_{PRB}= 50.

Then, since the number of layers = 3 and N_{PRB}>36, the calculation unit 206 refers to the table in Fig. 6 and acquires 42368 [bits] as the maximum value of the TBS where the number of layers = 3 corresponding to 14112 [bits] which is the maximum value of the TBS where the number of layers = 1.

Subsequently, the calculation unit 206 calculates 42368000 [bps], which is the maximum available throughput by multiplying 42368 [bits], which is the maximum value of the TBS where the acquired number of layers =3, by 1000.

(5) Where the system bandwidth = 10 [MHz], the maximum number of resource blocks (N_{PRB}) = 50, the number of layers = 4, and the MCS Index (I_{MCS}) = 15;

Firstly, the calculation unit 206 refers to the table in Fig. 3 and identifies I_{TBS}= 14 corresponding to I_{MCS}= 15.

Then, since the number of layers = 4 and N_{PRB}>27, the calculation unit 206 refers to the table in Fig. 4 and acquires 14112 [bits], which is the maximum value of the TBS where the number of layers = 1, from I_{TBS}= 14 and N_{PRB}=50.

Then, since the number of layers = 4 and N_{PRB}>27, the calculation unit 206 refers to the table in Fig. 7 and acquires 57336 [bits] as the maximum value of the TBS where the number of layers = 4 corresponding to 14112 [bits], which is the maximum value of the TBS where the number of layers = 1.

Subsequently, the calculation unit 206 calculates 57336000 [bps], which is the maximum available throughput by multiplying 57336 [bits], which is the maximum value of the TBS where the acquired number of layers =4, by 1000.

Referring back to the explanation of Fig. 2, if the maximum available throughput in the uplink direction, which is calculated by the calculation unit 206, exceeds a first threshold value, the change unit 207 changes the value of the maximum available throughput in the uplink direction to the first threshold value. Moreover, if the maximum available throughput in the downlink direction, which is calculated by the calculation unit 206, exceeds a second threshold value, the change unit 207 changes the value of the maximum available throughput in the downlink direction to the second threshold value.

The first threshold value and the second threshold value can be set as appropriate according to the respective communication environments for the uplink direction and the downlink direction. Moreover, a threshold value which is different for each application may be set. Furthermore, the value of either the maximum available throughput in the uplink direction or the maximum available throughput in the downlink direction which is calculated by the calculation unit 206 and whichever is larger may be changed to the smaller value. Consequently, it becomes possible to set the values of the maximum available throughput in the uplink and downlink directions to the same smaller value of either of them. Specifically speaking, it becomes possible to control the communication by suppressing the values of the maximum available throughputs in the uplink and downlink directions to the smaller value of either of them. As a result, for example, as stated in the aforementioned section of "SOLUTION TO PROBLEM," it becomes possible to reliably avoid the situation where the communication is controlled on the premise that the throughput larger than the actual maximum available throughput can be used. This is particularly effective for the voice call service which is provided by using the communication in the uplink and downlink directions.

If the maximum available throughput calculated by the calculation unit 206 is smaller than a third threshold value, the transmission unit 208 sends an alarm for drawing attention to the core network to which the donor base station 30 connects. Either the value of the maximum available throughput in the uplink direction or the value of the maximum available throughput in the downlink direction, whichever is smaller, is used as the maximum available throughput to be compared with the third threshold value. The third threshold value may be the same value as, or a different value from, either one of the first threshold value or the second threshold value described above.

Under this circumstance, the base station generally allocates the MCS Index and the number of layers, which are largest possible within the range capable of securing the radio quality, to terminals so that as many terminals as possible can be housed at the same time, that is, the occupancy of radio resources (such as frequency and time) per terminal is reduced as much as possible (the radio utilization efficiency becomes maximum). However, for example, if the radio quality is not determined, for example, immediately after the connection, it becomes difficult to allocate the MCS Index and the number of layers which maximize the utilization efficiency. Moreover, since the radio quality changes from moment to moment due to the congestion status of surrounding base stations, the MCS Index and the number of layers which maximize the utilization efficiency also change. Therefore, it is preferable that the maximum available throughput should be estimated from regularly obtained throughputs, but not an instantaneous maximum throughput, after observing the MCS Index and the number of layers which change from moment to moment to a certain degree.

### [Advantageous Effects]

According to the above-described embodiment of the present invention, the MCS and the number of layers in the uplink direction which are decided at the donor base station 30 on the basis of the communication status in the uplink direction, and the MCS and the number of layers in the downlink direction which are decided at the donor base station 30 on the basis of the communication status in the downlink direction are received from the donor base station 30; the maximum available throughput in the uplink direction is calculated on the basis of the received MCS and the received number of layers in the uplink direction and the maximum number of resource blocks which can be allocated by the donor base station 30, and the maximum available throughput in the downlink direction is calculated on the basis of the received MCS and the received number of layers in the downlink direction and the maximum number of resource blocks which can be allocated by the donor base station 30; and if the calculated maximum available throughput in the uplink direction exceeds the first threshold value, the value of the maximum available throughput in the uplink direction can be changed to the first threshold value; and if the calculated maximum available throughput in the downlink direction exceeds the second threshold value, the value of the maximum available throughput in the downlink direction can be changed to the second threshold value.

Consequently, the communication in the respective uplink and downlink directions can be controlled after setting the maximum available throughput in each of the uplink and downlink directions between the relay apparatus 20 and the donor base station 30 to be within the range not exceeding the threshold value for each of them.

Therefore, an appropriate maximum available throughput can be decided when controlling the communication at the relay apparatus 20 capable of relaying the communication between the donor base station 30 and the terminal device 10.

Under this circumstance, when the voice call service via VoLTE is provided by the mobile communications system 100, the voice call service is provided by using the communication in the uplink and downlink directions. Therefore, it is an especially effective means, when providing the voice call service, to adjust the maximum available throughputs in the respective uplink and downlink directions in consideration of the communication status in the respective uplink and downlink directions.

### [Other Embodiments]

The present invention has been described by referring to the embodiment as described above; however, it should not be understood that the description and the drawings which constitute part of this disclosure limit this invention. This disclosure should make various substitute embodiments, examples, and operation technologies obvious for those skilled in the art.

### [First Variation]

The aforementioned embodiment has described the case where the present invention is applied to the relay apparatus 20 capable of connecting to one donor base station 30 operated by a specified mobile network operator MNO; however, the configuration of the relay apparatus 20 is not limited to this. For example, the present invention can be also applied to a relay apparatus capable of simultaneously connecting to donor base stations of different mobile network operators. Such a relay apparatus will be explained below in detail as a relay apparatus 20s according to a first variation.

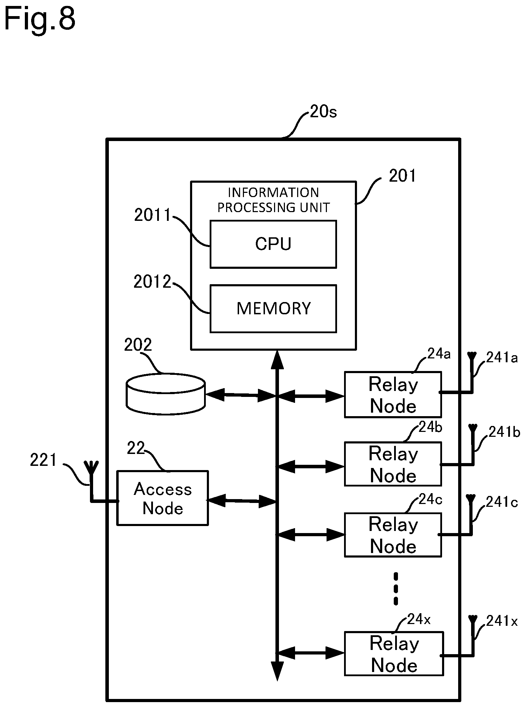

Fig. 8 illustrates a hardware configuration of the relay apparatus 20s according to the first variation. The relay apparatus 20s is a relay apparatus capable of simultaneously connecting to systems operated by different mobile network operators. The relay apparatus 20s is configured by including, for example, an access node 22, a plurality of relay nodes 24, an information processing unit 201, and an information storage unit 202. The information processing unit 201 includes a central processing unit (CPU) 2011 and a memory 2012 in the same manner as the information processing unit 201 for the relay apparatus 20 according to the aforementioned embodiment and functionally implements the relay apparatus 20s by execution of a computer software program, which is stored in the memory 2012, by the CPU 2011.

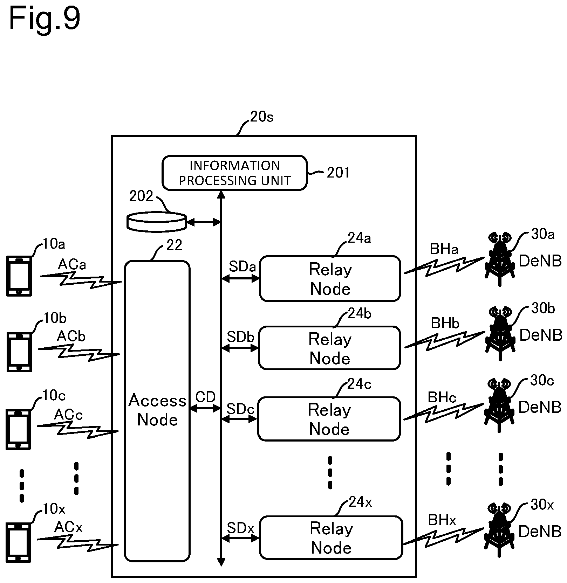

Functions of the relay apparatus 20s according to the first variation will be explained with reference to Fig. 9. The plurality of relay nodes 24 respectively establish backhaul communication paths BH with different donor cell base stations 30 as illustrated in Fig. 9. The terminal devices 10, the relay nodes 24, the backhaul communication paths BH, and the donor cell base stations 30 are managed by being respectively associated with identification information ID for identifying the relevant mobile network operator.

The identification information ID is unique information for identifying the relevant mobile network operator and, for example, a PLMN (Public Land Mobile Network) number which is a land mobile network number can be used. The PLMN number consists of a 3-digit country number and a 2 or 3-digit network number for identifying the relevant network operator. However, the identification information ID may be assigned according to a system other than the PLMN number. The representation will be hereinafter simplified and the different mobile network operators will be identified with lower-case alphabet characters, for example, by indicating the identification information of a mobile network operator x as IDx.

Referring to Fig. 9, a relay node 24a establishes a backhaul communication path BHa with a donor cell base station 30a associated with identification information IDa for identifying a mobile network operator a, and a terminal device 10a which is connected to the access node 22 is in a state capable of communicating with the donor cell base station 30a.

Moreover, a relay node 24b establishes a backhaul communication path BHb with a donor cell base station 30b associated with identification information IDb for identifying a mobile network operator b, and a terminal device 10b which is connected to the access node 22 is in a state capable of communicating with the donor cell base station 30b.

Furthermore, a relay node 24c establishes a backhaul communication path BHc with a donor cell base station 30c associated with identification information IDc for identifying a mobile network operator c, and a terminal device 10c which is connected to the access node 22 is in a state capable of communicating with the donor cell base station 30c.

Consequently, the relay apparatus 20s according to the first variation includes a plurality of relay nodes 24x capable of establishing a backhaul communication path BHx with each arbitrary mobile network operator x who is permitted to do business.

The relay apparatus 20s relays uplink data which is sent from the terminal device 10x to the donor cell base station 30x as described below. The information processing unit 201 supplies the uplink data, which has been provided from the access node 22, to the relay node 24x which establishes the backhaul communication path BHx associated with the identification information IDx included in that uplink data. Specifically speaking, the information processing unit 201 refers to the identification information IDx included in the uplink data. Subsequently, a block(s) of packet data to which the referenced identification information IDx is assigned is supplied to the relevant relay node 24x. As a result of this operation, integrated data CD is sorted into divided data SDx for each mobile network operator.

The procedure for sorting the above-mentioned the divided data SDx will be explained in detail. The information processing unit 201 writes blocks of the packet data to the information storage unit 202 in the order of arrival. Then, the information processing unit 201 reads the blocks of the packet data in the written order by using an FIFO (First-in First-out) function of the information storage unit 202. Subsequently, the information processing unit 201 supplies the read blocks of the packet data, as the divided data SDx sorted for each mobile network operator x on the basis of the identification information IDx, to the relay node 24x. Then, the relay node 24x sends the supplied divided data SDx to the relevant donor cell base station 30x via the backhaul communication path BHx.

The relay apparatus 20s relays the downlink data sent from the donor cell base station 30x to the terminal device 10x as described below. The information processing unit 201 sequentially supplies the downlink data from one or more backhaul communication paths BHx to the access node 22. Specifically speaking, the information processing unit 201 generates the integrated data CD by integrating the packet data, which are received and transferred from the relay node 24x, with respect to each block in the order of arrival. As a result of this operation, the blocks of the packet data individually sent from the respective mobile network operators are integrated.

The procedure for generating the above-mentioned integrated data CD will be explained in detail. Each relay node 24x outputs the blocks of the packet data in the order of arrival. Then, the information processing unit 201 writes the blocks of the packet data to the information storage unit 202 in the output order. Subsequently, the information processing unit 201 reads the blocks of the packet data in the written order by using the FIFO function of the information storage unit 204 and outputs them as the integrated data CD to the access node 22. Then, the access node 22 sequentially sends the blocks of the packet data via a common frequency bandwidth to each terminal device 10x.

The relay apparatus 20s which is configured as described above controls the communication in the respective uplink and downlink directions after setting the maximum available throughputs in the respective uplink and downlink directions between the relay apparatus 20 and the donor base station 30 with respect to each backhaul communication path BHx established by each relay node 24x.

The above-described relay apparatus 20s has functions equivalent to the respective functions (the receiving unit 205, the calculation unit 206, the change unit 207, and the transmission unit 208 in Fig. 2) possessed by the information processing unit 201 for the relay apparatus 20 according to the embodiment and each of these functions is implemented with respect to each backhaul communication path BHx established by each relay node 24x. The respective functions possessed by the information processing unit 201 for the relay apparatus 20s according to the first variation will be specifically explained below.

The receiving unit 205 receives the MCS and the number of layers in the uplink direction and the MCS and the number of layers in the downlink direction with respect to each backhaul communication path BHx established by each relay node 24x. Moreover, the receiving unit 205 receives the maximum number of resource blocks from the donor base station 30x when connecting to the donor base station 30x.

The calculation unit 206 calculates the maximum available throughput in the uplink direction and the maximum available throughput in the downlink direction with respect to each backhaul communication path BHx established by each relay node 24x.

Specifically speaking, the calculation unit 206 calculates the maximum throughput which can be used in the uplink direction on the basis of a value calculated from a combination of an index corresponding to the MCS in the uplink direction, which is received by the receiving unit 205, and the maximum number of resource blocks, and the number of layers in the uplink direction which is received by the receiving unit 205. Then, the calculation of this maximum throughput is conducted with respect to each backhaul communication path BHx. Moreover, the calculation unit 206 calculates the maximum throughput which can be used in the downlink direction on the basis of a value calculated from a combination of an index corresponding to the MCS in the downlink direction, which is received by the receiving unit 205, and the maximum number of resource blocks, and the number of layers in the downlink direction which is received by the receiving unit 205. Then, the calculation of this maximum throughput is conducted with respect to each backhaul communication path BHx.

Since specific procedures for calculating the maximum available throughput which can be used in the uplink direction or the downlink direction are similar to those in the aforementioned embodiment, an explanation about them is omitted.

The change unit 207 changes the value of the maximum available throughput in the uplink direction and the value of the maximum available throughput in the downlink direction with respect to each backhaul communication path BHx established by each relay node 24x.

Specifically speaking, if the maximum available throughput in the uplink direction, which is calculated by the calculation unit 206, exceeds a first threshold value, the change unit 207 changes the value of the maximum available throughput in the uplink direction to the first threshold value. This change processing is then executed for each backhaul communication path BHx. Moreover, if the maximum available throughput in the downlink direction, which is calculated by the calculation unit 206, exceeds a second threshold value, the change unit 207 changes the value of the maximum available throughput in the downlink direction to the second threshold value. This change processing is then executed for each backhaul communication path BHx.

The first threshold value and the second threshold value are similar to those in the aforementioned embodiment, so an explanation about them is omitted. Moreover, the value of whichever is larger of the maximum available throughputs may be changed to the smaller value in the same manner as in the aforementioned embodiment, so an explanation about that is also omitted.

The transmission unit 208 compares the maximum available throughput calculated by the calculation unit 206 with a third threshold value with respect to each backhaul communication path BHx established by each relay node 24x. If the maximum available throughput is smaller than the third threshold value, the transmission unit 208 sends an alarm to the core network to which the donor base station 30x connects. The value of either the maximum available throughput in the uplink direction or the maximum available throughput in the downlink direction, whichever is smaller, is used as the maximum available throughput to be compared with the third threshold value.

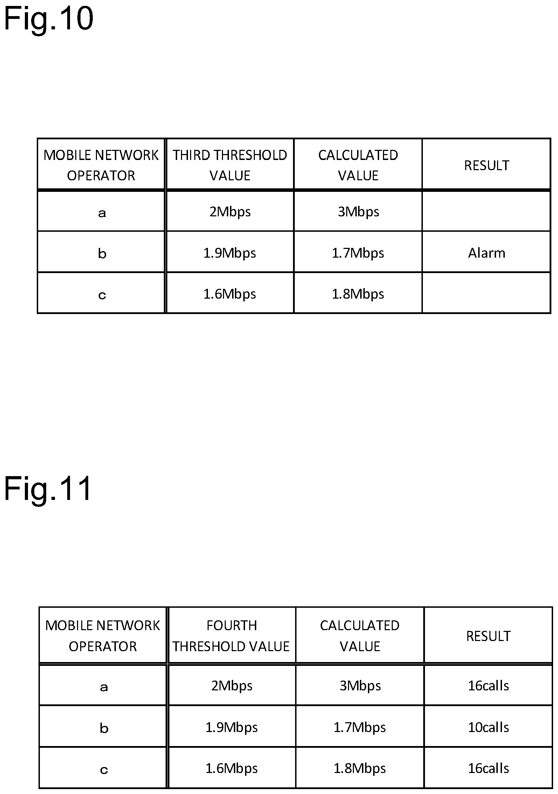

Referring to Fig. 10, the function that sends the alarm will be specifically explained. Fig. 10 shows that the mobile network operators which have established the backhaul communication paths BHx are three mobile network operators "a," "b," and "c," their respective third threshold values are "2 Mbs," "1.9 Mbs," and "1.6 Mbs," and the maximum available throughputs which are their respective calculated values are "3 Mbs," "1.7 Mbs," and "1.8 Mbs." In this case, the calculated value of the mobile network operator "b" becomes smaller than the third threshold value. Therefore, the backhaul communication path BHb for the mobile network operator "b" becomes a target of the alarm.

According to the first variation, the relay apparatus 20s having the plurality of relay nodes 24x for respectively establishing the backhaul communication paths BHx, which are associated with the identification information IDx, with the donor base station 30x associated with the identification information IDx can bring about the advantageous effects similar to those of the aforementioned embodiment. Specifically speaking, the MCS and the number of layers in the uplink direction and the MCS and the number of layers in the downlink direction can be received with respect to each established backhaul communication path BHx; the maximum available throughput in the uplink direction and the maximum available throughput in the downlink direction can be calculated with respect to each established backhaul communication path BHx; and the value of the maximum available throughput in the uplink direction and the value of the maximum available throughput in the downlink direction can be changed with respect to each established backhaul communication path BHx.

Moreover, according to the first variation, if the maximum available throughput calculated with respect to each backhaul communication path BHx established by each relay node 24x is smaller than the third threshold value, the alarm can be sent to the core network to which the donor base station 30x connects.

### [Second Variation]

Regarding the relay apparatus 20 according to the aforementioned embodiment and the relay apparatus 20s according to the first variation, the information processing unit 201 may further include a connection control unit. If the maximum available throughput calculated by the calculation unit 206 is smaller than a fourth threshold value, the connection control unit for the relay apparatus 20 according to the embodiment limits the maximum number of the terminal devices 10 which can connect to the access node 22 on the basis of the maximum available throughput. On the other hand, the connection control unit for the relay apparatus 20s according to the first variation compares the maximum available throughput calculated by the calculation unit 206 with the fourth threshold value with respect to each backhaul communication path BHx established by the relay node 24x; and if the maximum available throughput is smaller than the fourth threshold value, the maximum number of the terminal devices 10 which can connect to the access node 22 is limited based on the maximum available throughput.

The value of either the maximum available throughput in the uplink direction or the maximum available throughput in the downlink direction, whichever is smaller, is used as the maximum available throughput to be compared with the fourth threshold value. Moreover, the fourth threshold value according to the second variation may be set as the same value as, or a different value from, the third threshold value according to the first variation.

Referring to Fig. 11, a specific explanation will be provided about a case where the maximum number of the terminal devices 10 which can connect to the access node 22 is limited with the relay apparatus 20s according to the first variation. In the example in Fig. 11, it is assumed that "16 calls" is set as an initial value of the maximum number of the terminal devices 10 which can be set for each mobile network operator and "16 calls" is also set as the maximum number of the terminal devices 10 which can connect to the entire relay apparatus 20s.

Fig. 11 shows that the mobile network operators which have established the backhaul communication paths BHx are three mobile network operators "a," "b," and "c," their respective forth threshold values are "2 Mbs," "1.9 Mbs," and "1.6 Mbs," and the maximum available throughputs which are their respective calculated values are "3 Mbs," "1.7 Mbs," and "1.8 Mbs." In this case, the calculated value of the mobile network operator "b" becomes smaller than the fourth threshold value. Therefore, the maximum number of the terminal devices 10b for the mobile network operator "b" is limited by being reduced from "16 calls" to "10 calls."

The second variation can bring about advantageous effects similar to those of the aforementioned embodiment and the aforementioned first variation; and if the calculated maximum available throughput with respect to each backhaul communication path BHx established by each relay node 24x is smaller than the fourth threshold value, the maximum number of the terminal devices 10 which can connect to the access node 22 can be limited based on the maximum available throughput.

### [Third Variation]

The aforementioned embodiment, the first variation, and the second variation have been explained by exemplifying the mobile communications systems according to the LTE standards; however, the invention is not limited to these examples and the present invention can be also applied to other telecommunications standards and telecommunications standards which may be set in the future.

### REFERENCE SIGNS LIST

- 10: terminal device(s)
- 20: relay apparatus
- 22: access node
- 24: relay node(s)
- 30: donor base station (macro cell base station)
- 40: first core network EPC
- 50: femto core network
- 60: second core network EPC
- 100: mobile communications system
- 201: information processing unit
- 202: information storage unit
- 205: receiving unit
- 206: calculation unit
- 207: selection unit
- 208: transmission unit

## Claims

1. A relay apparatus capable of relaying communication between a macro cell base station and at least one terminal device, the relay apparatus comprising:
a receiving unit that receives an MCS (Modulation and Coding Scheme) and the number of layers in an uplink direction, which are decided at a macro cell base station on the basis of a communication status in the uplink direction from a local apparatus to the macro cell base station, and receives an MCS and the number of layers in a downlink direction, which are decided at the macro cell base station on the basis of a communication status in the downlink direction from the macro cell base station to the local apparatus;
a calculation unit that calculates a maximum available throughput in the uplink direction on the basis of the received MCS and the received number of layers in the uplink direction and a maximum number of resource blocks which can be allocated by the macro cell base station, and calculates a maximum available throughput in the downlink direction on the basis of the received MCS and the received number of layers in the downlink direction and a maximum number of resource blocks which can be allocated by the macro cell base station; and
a change unit that: changes a value of the maximum available throughput in the uplink direction to a first threshold value if the calculated maximum available throughput in the uplink direction exceeds the first threshold value; and changes a value of the maximum available throughput in the downlink direction to a second threshold value if the maximum available throughput in the downlink direction exceeds the second threshold value.

2. The relay apparatus according to claim 1, further comprising:
a plurality of relay nodes, each of which establishes a backhaul communication path associated with specified identification information between the relevant relay node and the macro cell base station associated with the specified identification information; and an information processing unit that controls communication between the terminal device associated with the specified identification information and the specified backhaul communication path associated with the specified identification information,
wherein the receiving unit receives the MCS and the number of layers in the uplink direction and the MCS and the number of layers in the downlink direction with respect to each established backhaul communication path;
wherein the calculation unit calculates the maximum available throughput in the uplink direction and the maximum available throughput in the downlink direction with respect to each established backhaul communication path; and
wherein the change unit changes the value of the maximum available throughput in the uplink direction and the value of the maximum available throughput in the downlink direction with respect to each established backhaul communication path.

3. The relay apparatus according to claim 1 or 2,
wherein the calculation unit calculates a maximum throughput which can be used in the uplink direction on the basis of a value calculated from a combination of an index corresponding to the received MCS in the uplink direction and the maximum number of resource blocks, and the received number of layers in the uplink direction, and calculates a maximum throughput which can be used in the downlink direction on the basis of a value calculated from a combination of an index corresponding to the received MCS in the downlink direction and the maximum number of resource blocks, and the received number of layers in the downlink direction.

4. The relay apparatus according to any one of claims 1 to 3,
wherein the receiving unit further receives the maximum number of resource blocks when connecting to the macro cell base station.

5. The relay apparatus according to any one of claims 1 to 4,
wherein the communication is voice calls; and
wherein the change unit changes the calculated value of either the maximum available throughput in the uplink direction or the maximum available throughput in the downlink direction, whichever is larger, to a smaller value of either of them.

6. The relay apparatus according to any one of claims 1 to 5, further comprising a transmission unit that sends an alarm to a core network to which the macro cell base station connects when the calculated maximum available throughput is smaller than a third threshold value.

7. The relay apparatus according to any one of claims 1 to 6, further comprising a connection control unit that controls a maximum number of the terminal devices which can be connected, when the calculated maximum available throughput is smaller than a fourth threshold value.

8. A communication control method for controlling communication of a relay apparatus capable of relaying communication between a macro cell base station and at least one terminal device,
the communication control method comprising:
a reception step of receiving an MCS and the number of layers in an uplink direction, which are decided at a macro cell base station on the basis of a communication status in the uplink direction from the relay apparatus to the macro cell base station, and receiving the MCS and the number of layers in a downlink direction, which are decided at the macro cell base station on the basis of a communication status in the downlink direction from the macro cell base station to the relay apparatus;
a calculation step of calculating a maximum available throughput in the uplink direction on the basis of the received MCS and the received number of layers in the uplink direction and a maximum number of resource blocks which can be allocated by the macro cell base station, and calculating a maximum available throughput in the downlink direction on the basis of the received MCS and the received number of layers in the downlink direction and a maximum number of resource blocks which can be allocated by the macro cell base station; and
a change step of: changing a value of the maximum available throughput in the uplink direction to a first threshold value if the calculated maximum available throughput in the uplink direction exceeds the first threshold value; and changing a value of the maximum available throughput in the downlink direction to a second threshold value if the maximum available throughput in the downlink direction exceeds the second threshold value.

9. A program for causing a computer to function as:
a receiving unit that receives an MCS and the number of layers in an uplink direction, which are decided at a macro cell base station on the basis of a communication status in the uplink direction from a relay apparatus, which is capable of relaying communication between the macro cell base station and at least one terminal device, to the macro cell base station, and receives an MCS and the number of layers in a downlink direction, which are decided at the macro cell base station on the basis of a communication status in the downlink direction from the macro cell base station to the relay apparatus;
a calculation unit that calculates a maximum available throughput in the uplink direction on the basis of the received MCS and the received number of layers in the uplink direction and a maximum number of resource blocks which can be allocated by the macro cell base station, and calculates a maximum available throughput in the downlink direction on the basis of the received MCS and the received number of layers in the downlink direction and a maximum number of resource blocks which can be allocated by the macro cell base station; and
a change unit that: changes a value of the maximum available throughput in the uplink direction to a first threshold value if the calculated maximum available throughput in the uplink direction exceeds the first threshold value; and changes a value of the maximum available throughput in the downlink direction to a second threshold value if the maximum available throughput in the downlink direction exceeds the second threshold value.
